# EUROPEAN PATENT SPECIFICATION

(11) **EP 3 683 013 B1**
(45) Date of publication and mention of the grant of the patent: **19.03.2025**
(21) Application number: 18856738.2
(22) Date of filing: 03.07.2018
(51) Int. Cl.: B01D 36/00, B01D 37/04, B01D 29/60, B23Q 11/10, B23Q 17/24, B23Q 11/00, C02F 1/00, C02F 103/02

(54) **COOLANT LIQUID PROCESSING SYSTEM**
KÜHLFLÜSSIGKEITSVERARBEITUNGSSYSTEM
SYSTÈME DE TRAITEMENT DE LIQUIDE DE REFROIDISSEMENT

(30) Priority: 14.09.2017 JP 2017176397
(43) Date of publication of application: 22.07.2020
(73) Proprietor: Sumitomo Heavy Industries Finetech, Ltd., Kurashiki-shi, Okayama 713-8501 (JP)
(72) Inventor: NISHIZAWA Shinya, Kurashiki-shi Okayama 713-8501 (JP)
(74) Representative: Louis Pöhlau Lohrentz
(86) International application number: PCT/JP2018/025187
(87) International publication number: WO 2019/054018

(56) References cited:
- CN-A- 106 624 975
- DE-A1- 19 515 710
- JP-A- 2002 052 388
- JP-A- 2004 066 425
- JP-A- 2004 066 425
- JP-A- 2011 173 190
- US-A1- 2017 159 623
- US-B1- 6 299 513

## Description

### Technical Field

The present invention relates to a coolant liquid processing system for filtering a coolant liquid containing sludge and removing the sludge from the coolant liquid.

### Background Art

In a coolant liquid supplied to a machine tool, impurities such as cutting chips generated during processing are incorporated into the coolant liquid as sludge. In order to reuse the coolant liquid, a coolant liquid processing system that captures sludge in the coolant liquid by filtration and purifies the coolant liquid is known. The filtration device includes a filter having a mesh smaller than a predetermined sludge particle size so as to prevent sludge having a predetermined particle size or more from passing therethrough. A coolant liquid is allowed to pass through the filter such that sludge is captured. When the filtration device is used for a long period of time, sludge gradually accumulates upstream of the filter, and the filter is clogged. When the filter is clogged, the filter is cleaned by a filter cleaning mechanism.

PTL 1 discloses a coolant filtration device including a backwash mechanism as a filter cleaning mechanism. The backwash mechanism uses a mechanism that causes compressed air to flow through a filter in a direction opposite to a normal flow of a coolant liquid so as to peel off sludge such as cutting chips attached to the periphery of the filter. In addition, the coolant filtration device is provided with a pressure switch as a unit that detects a clogged state of the filter. When the pressure switch detects that the filter is in a clogged state, the filter is cleaned by the filter cleaning mechanism.

Furthermore, the coolant filtration device includes a treatment tank for storing a treatment liquid treated by the filtration device. In the treatment tank, a replenishment time required for replenishing the treatment liquid until the treatment liquid reaches a predetermined amount is measured. Then, when the replenishment time becomes equal to or longer than a preset time, a notification of an abnormality is sent. Accordingly, in this coolant filtration device, it is possible to notify of the replacement time of the filter and the cleaning time of a liquid-to-be-treated tank that stores the coolant liquid
containing the sludge, at an early stage.

### Citation List

### Patent Literature

[PTL 1] Japanese Unexamined Patent Publication No. 2004-66425

### Summary of Invention

### Technical Problem

A coolant liquid processing system in the related art notifies the time of cleaning and replacement of a filter by detecting an increase in differential pressure and a decrease in a filtration treatment amount. However, in a case where there is an abnormality that sludge leaks to a treatment liquid side due to damage to a filter or the like, an increase in the differential pressure or a decrease in the filtration treatment amount does not occur, so that the abnormality that sludge leaks to the treatment liquid side from the filter cannot be detected in the coolant liquid processing system in the related art.

Therefore, an object of the present invention is to suppress the incorporation of sludge into a treatment liquid treated by a filtration device by quickly detecting a leakage of the sludge due to damage to a filter or the like in a coolant liquid processing system including the filtration device for filtering a coolant liquid containing sludge.

### Solution to Problem

As a result of intensive studies on the above problems, the present inventor found that by detecting particles in a treatment liquid treated by a filtration treatment device, a leakage of sludge due to damage to a filter or the like can be quickly detected, and completed the present invention.

That is, the present invention is the following coolant liquid processing system.

A coolant liquid processing system of the present invention for solving the above problem includes: a filtration device for filtering a coolant liquid containing sludge; and a detector that detects particles in a treatment liquid filtered by the filtration device.

According to the coolant liquid processing system, since the detector that detects particles in the treatment liquid is provided in a rear stage of the filtration device, a leakage of the sludge from a filter can be quickly noticed. In a case where the leakage of the sludge is detected, the incorporation of the sludge into the treatment liquid can be suppressed by taking measures such as immediately stopping the filtration treatment device.

An embodiment of the coolant liquid processing system of the present invention further includes: a treatment liquid tank that stores the treatment liquid, in which the detector is installed between the filtration device and the treatment liquid tank.

According to this feature, the leakage of the sludge due to the damage to the filter or the like can be detected more quickly, so that an effect of the present invention of suppressing the incorporation of the sludge into the treatment liquid can be more reliably exhibited.

Furthermore, when the detector is installed in the treatment liquid tank, the sludge leaked from the filter is diluted with the treatment liquid in the treatment liquid tank, so that there is a problem that the sensitivity of the detector decreases. However, by installing the detector between the filtration device and the treatment liquid tank, the sludge leaked from the filter is detected before being diluted in the treatment liquid tank, so that the sensitivity of the detector can be increased.

In the embodiment of the coolant liquid processing system of the present invention, the detector is an optical detector that detects particles using light.

The optical detector not only can detect sludge in the treatment liquid with high sensitivity, but also can measure the particle size and the number of particles of the sludge, so that a leakage of the sludge can be accurately detected. Therefore, by using the optical detector as the detector, for example, in a case where particles larger than a set particle size are detected or in a case where a larger number of particles than a set number of particles are detected, advanced control, such as stopping the operation, is possible.

### Advantageous Effects of Invention

According to the present invention, in a coolant liquid processing system including a filtration device for filtering a coolant liquid containing sludge, a leakage of sludge due to damage to a filter or the like can be quickly detected, and the incorporation of the sludge into a treatment liquid treated by the filtration device can be suppressed.

### Brief Description of Drawings

Fig. 1 is a schematic explanatory view illustrating a structure of a coolant liquid processing system of a first embodiment of the present invention.
Fig. 2 is a schematic explanatory view illustrating a structure of a coolant liquid processing system of a second embodiment of the present invention.
Fig. 3 is a schematic explanatory view illustrating a structure of a coolant liquid processing system of a third embodiment of the present invention.
Fig. 4 is a flowchart illustrating an example of a control method of the coolant liquid processing system of the third embodiment of the present invention.

### Description of Embodiments

A coolant liquid is lubricating oil, water, or the like used for processing machines for cutting, polishing, or the like and may be any of an aqueous liquid and an oily liquid. When the coolant liquid is used in a processing machine such as a cutting machine, a polishing machine, or a grinder, particles such as cutting chips generated by processing such as cutting and polishing are incorporated into the used coolant liquid as sludge. A coolant liquid processing system of the present invention is a system for removing sludge from a coolant liquid containing sludge such as cutting chips. In particular, the coolant liquid processing system of the present invention is a coolant liquid processing system including a filtration device for filtering a coolant liquid containing sludge, and includes a detector that detects particles in a treatment liquid filtered by the filtration device.

Hereinafter, embodiments of the invention will be described in detail with reference to the accompanying drawings.

### [First Embodiment]

### [Coolant Liquid Processing System]

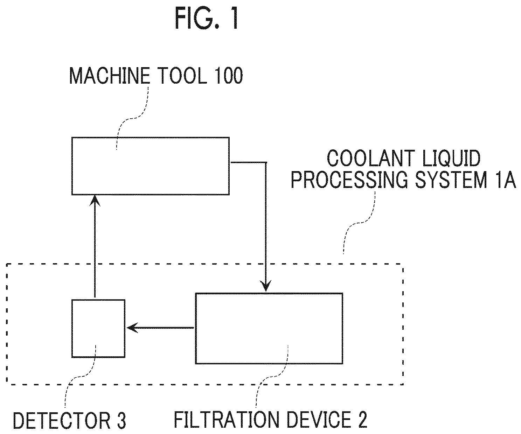

Fig. 1 illustrates an overall configuration of a coolant liquid processing system 1A and a machine tool 100 according to a first embodiment of the present invention. The machine tool 100 is a processing machine such as a grinder or a cutting machine that uses a coolant liquid, and generates particles of various sizes, such as cutting chips.

The coolant liquid processing system 1A of the present invention includes a filtration device 2 for filtering a coolant liquid containing sludge, and a detector 3 that detects particles contained in a treatment liquid filtered by the filtration device 2. The coolant liquid containing sludge discharged from the machine tool 100 is subjected to removal of particles of a predetermined size by the filtration device 2, and is used again as a purified coolant liquid in the machine tool 100.

### <Filtration Device>

The filtration device 2 is a device for filtering the coolant liquid containing sludge discharged from the machine tool 100, and includes a filter. The opening of the filter is appropriately designed depending on the particle size of the sludge contained in the coolant liquid, and is, for example, 1 to 30 µm, and more preferably 5 to 20 µm. By setting the opening of the filter to 1 µm or more, a sufficient filtration treatment amount can be secured. On the other hand, by setting the opening of the filter to 30 µm or less, the coolant liquid is sufficiently purified, and problems in the machine tool 100 can be prevented.

The material of the filter is not particularly limited, and examples thereof include organic films such as polyethylene (PE), polypropylene (PP), tetrafluoroethylene (PTFE), cellulose acetate (CA), polyacrylonitrile (PAN), polyethersulfone (PES), polyimide (PI), polysulfone (PS), and inorganic films such as aluminum oxide (alumina Al₂O₃), zirconium oxide (zirconia ZrO₂), titanium oxide (titania TiO₂), stainless steel (SUS), and glass (SPG).

The shape of the filter may be any shape, and examples thereof include a plate shape and a cylindrical shape. As a filtration method, for example, there are a dead-end filtration method in which the entire amount of the coolant liquid is filtered, and a cross flow method in which the coolant liquid is filtered while flowing in parallel to the film surface. The filtration method is not particularly limited, and can be appropriately selected in consideration of the power cost of a supply pump for the coolant liquid, the state of sludge accumulation on the film surface, and the like.

It is preferable that the filtration device 2 is provided with a filter cleaning device. The filter cleaning device is not particularly limited, and examples thereof include a backwash device and a scraping device. The backwash device is a device that causes a fluid to flow in a direction opposite to a filtration flow direction so as to peel off sludge deposited on the surface of the filter. In addition, the scraping device is a device that scrapes sludge deposited on the surface of the filter by sliding a scraping member or the like on the surface of the filter or blowing high-pressure air toward the surface of the filter. It is preferable to use the backwash device from the viewpoint of excellent cleaning performance. In addition, the fluid used in the backwash device is not particularly limited, and for example, air, a filtered treatment liquid, or the like can be used. In the case of using air, there is an effect that the speed of filter penetration is high and workability is excellent.

Furthermore, it is preferable that the filtration device 2 is provided with a unit that detects a state of clogging of the filter in order to determine the time for cleaning the filter. Examples of the unit that detects the state of clogging of the filter include a pressure switch that measures a differential pressure before and after the filter. By using the pressure switch, when the differential pressure increases to a predetermined value, a clogged state is determined, and a cleaning device can be automatically operated.

In addition, the filtration device 2 may also be provided with a unit that detects the performance of the filter in order to determine a replacement time of the filter. Examples of the unit that detects the performance of the filter include a unit that detects a filtration treatment amount. When the filtration treatment amount decreases to a predetermined value, it is determined that the performance of the filter has decreased, and the time for replacing the filter can be determined.

### <Detector>

The detector 3 has a configuration for detecting particles in the treatment liquid filtered by the filtration device 2. The detector 3 is not particularly limited as long as particles in the treatment liquid can be detected. Examples thereof include an optical detector that detects particles using light, and a capturing detector that captures and detects particles using a magnet, a filter, or the like.

The optical detector irradiates the treatment liquid passing through a flow path with light, and detects the scattered light, transmitted light, absorbed light, reflected light, and the like to determine the size of particles or the number of particles in the treatment liquid. The wavelength of the light is not particularly limited, and any wavelength can be used for detection as long as particles can be detected. From the viewpoint of reducing the influence of light absorption on the chromaticity of the treatment liquid, it is preferable to use light having a wavelength of 650 nm or more.

As the optical detector, it is preferable that the treatment liquid is passed through a measurement unit formed by a minute flow path, and is measured using laser light. The minute flow path is a flow path that is branched off from the main flow path through which substantially the entire amount of the coolant liquid passes. The coolant liquid passes through various processes while circulating, and therefore contains bubbles in the liquid. When the sensitivity of the optical detector is increased, bubbles in the coolant liquid tend to be easily detected as noise. Therefore, it is preferable to remove the bubbles that pressurize the measurement unit and affect the measurement. When the measurement unit is formed by a minute flow path, the measurement unit can be pressurized by a simple device such as a small oil feeder.

In order to supply the coolant liquid to the minute flow path at a stable flow rate while pressurizing the minute flow path, it is preferable to provide the oil feeder in the front stage of the optical detector. It is preferable that the capacity of the oil feeder can be adjusted to a pressure of 0.2 MPa or more. By adjusting the supply pressure to 0.2 MPa or more, bubbles that affect the measurement can be removed, and stable measurement can be realized. In addition, by adjusting the supply pressure to 0.2 MPa or more, in a case where particles of an unpostulated size flow into the minute flow path, there is an action of extruding the particles at a high pressure and there is an effect of preventing clogging of the minute flow path with the particles.

As a specific example of the optical detector, for example, the treatment liquid is passed through the measurement unit at a constant controlled flow rate, and the treatment liquid is irradiated with laser light having a wavelength of 680 nm. The irradiated laser light passes through the measurement unit and is detected by a photodetector such as a photodiode. When particles are incorporated in the treatment liquid, the laser light is shielded, so that the photodetector detects a shadow. In the photodetector, photoelectric conversion is performed according to the size of the shadow of the particles, the area derived from the amount of voltage drop caused by the shielded photoelectric amount is converted into a circle, and the diameter thereof can be treated as the particle size. As described above, the optical detector can detect the particle size, the number of particles, and the like of the particles in the treatment liquid with high sensitivity.

Next, the presence or absence of a leakage of sludge in the filtration device 2 is determined based on the particle size of the particles in the treatment liquid and the number of particles detected by the optical detector. Regarding the determination of the leakage of sludge, for example, in a case where particles larger than a set particle size are detected or in a case where a larger number of particles than a set number of particles are detected, it is determined that a leakage of the sludge has occurred, and control such as stopping the operation of the filtration treatment 2 is performed. Such control may be performed, for example, by a control unit such as a computer, or by notifying the operator of the leakage of sludge by an alarm, and stopping the operation of the filtration device 2 by the operator.

The capturing detector captures and detects particles by a capturing unit for capturing particles, such as a magnet or a filter. Examples of a method of detecting a captured state of the particles include a method of providing a monitoring window in a flow path and monitoring the state of the capturing unit, and a method of periodically disassembling and observing the state of the capturing unit. The capturing detector can easily determine the presence or absence of leakage without using an expensive optical detector.

### [Second Embodiment]

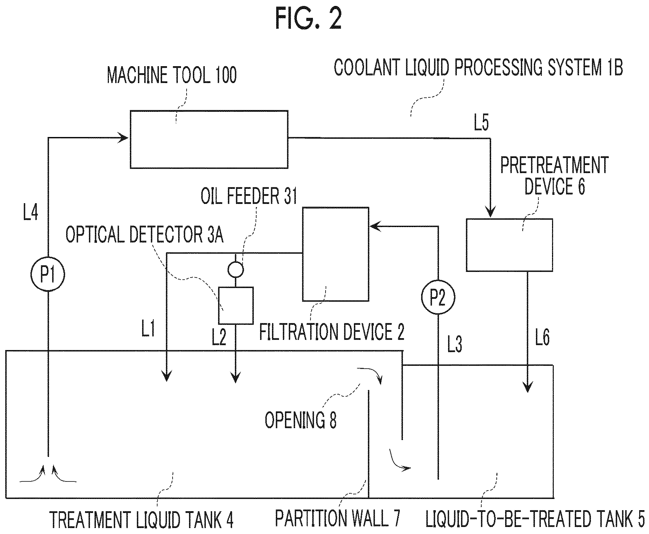

Fig. 2 illustrates structures of a coolant liquid processing system 1B of a second embodiment of the present invention and the machine tool 100.

The coolant liquid processing system 1B of the second embodiment includes a treatment liquid tank 4 for storing the treatment liquid filtered by the filtration device 2, and a liquid-to-be-treated container 5 that stores the coolant liquid containing sludge discharged from the machine tool 100. In addition, an optical detector 3A is provided as a detector in a flow path L2 between the filtration device 2 and the treatment liquid tank 4.

The coolant liquid is supplied from the treatment liquid tank 4 to the machine tool 100 by a pump P1 provided in the flow path L4. The coolant liquid containing sludge used in the machine tool 100 is recovered in the liquid-to-be-treated container 5 through a flow path L5, a pretreatment device 6, and a flow path L6. By providing the treatment liquid tank 4, when sludge leaks from the filtration device 2, the sludge is stored in the treatment liquid tank 4, so that large particles or the like can be prevented from immediately flowing into the machine tool 100.

The coolant liquid containing the sludge recovered in the liquid-to-be-treated container 5 is suctioned by a pump P2 provided in a flow path L3 and supplied to the filtration device 2. The treatment liquid treated by the filtration device 2 is supplied to the treatment liquid tank 4 via a flow path L1. A portion of the treatment liquid is supplied to the treatment liquid tank 4 via the branched flow path L2 (minute flow path) . The optical detector 3A is provided in the flow path L2, and the optical detector 3A detects whether or not particles are incorporated into the treatment liquid treated by the filtration device. By providing the flow path L2 (minute flow path) branched off from the flow path L1 (main flow path), the treatment liquid can be pressurized by a simple oil feeder 31. Then, by pressurizing the treatment liquid, bubbles that affect the measurement are removed, and the accuracy and sensitivity of the measurement by the optical detector 3A can be increased.

By installing the optical detector 3A in the flow path L2 between the filtration device 2 and the treatment liquid tank 4, particles in the treatment liquid can be detected before the treatment liquid is supplied to the treatment liquid tank 4. In accordance with this, the leakage of the sludge due to the damage to the filter or the like can be more quickly detected, so that the effect of the present invention of suppressing the incorporation of the sludge into the treatment liquid supplied to the treatment liquid tank 4 can be more reliably exhibited.

In addition, when the optical detector 3A is installed at a position such as the treatment liquid tank 4 and the flow path L4, where the treatment liquid immediately after being treated by the filtration device 2 joins another treatment liquid, the sludge leaked from the filter is diluted with the treatment liquid in the treatment liquid tank 4, so that there is a problem that the sensitivity of the optical detector 3A is reduced. Therefore, by installing the optical detector 3A in the flow path L2 between the filtration device 2 and the treatment liquid tank 4, the sludge leaked from the filter is detected before being diluted in the treatment liquid tank 4, so that there is also an effect of increasing the sensitivity of the optical detector 3A.

The optical detector 3A may be installed at any position between the filtration device 2 and the machine tool 100. For example, it is possible to install the optical detector 3A in the treatment liquid tank 4, the flow path L4, or the like.

In the coolant liquid processing system 1B of the second embodiment, the treatment liquid tank 4 and the liquid-to-be-treated container 5 are formed by providing a partition wall 7 in one treatment tank. Furthermore, an opening 8 is formed in an upper portion of the partition wall 7 such that the treatment liquid tank 4 and the liquid-to-be-treated container 5 communicate with each other in an upper space. The treatment liquid tank 4 and the liquid-to-be-treated container 5 may be formed as separate tanks. In this case, the upper spaces of the treatment liquid tank 4 and the liquid-to-be-treated container 5 may be caused to communicate with each other by a pipe or the like. By causing the upper spaces of the treatment liquid tank 4 and liquid-to-be-treated container 5 to communicate with each other, the treatment liquid in the treatment liquid tank 4 can flow into the liquid-to-be-treated container 5 as an overflow, so that a treatment amount treated by the filtration device 2 can be set to be larger than the amount of the treatment liquid supplied to the machine tool 100.

It is preferable that the treatment amount treated by the filtration device 2 is set to be larger than the amount of the treatment liquid supplied to the machine tool 100. For example, the ratio of the flow rate of a liquid to be treated supplied from the liquid-to-be-treated container 5 to the filtration device 2 via the flow path L3 to the flow rate of the treatment liquid supplied from the treatment liquid tank 4 to the machine tool 100 via the flow path L4 (the flow rate of the liquid to be treated / the flow rate of the treatment liquid) is 1 or more, preferably 1.2 or more, and more preferably 1.4 or more. Accordingly, it is possible to prevent a problem that the liquid level of the treatment liquid tank 4 is lowered and the supply of the coolant liquid to the machine tool 100 is stopped.

Furthermore, the coolant liquid processing system 1B of the second embodiment includes the pretreatment device 6 for removing sludge from the coolant liquid containing sludge discharged from the machine tool 100. Since the load on the filtration device 2 can be reduced by the pretreatment device 6, the frequency of operations such as filter replacement can be reduced.

The pretreatment device 6 may be any device as long as the pretreatment device is a device for removing sludge. Examples thereof include a magnetic separator that causes sludge to be adhered and removed by magnetic force, a sludge conveyor that scrapes and removes sludge settled to the bottom of a storage tank, and a cyclone separator that separates and removes sludge by centrifugal force. The pretreatment device 6 may be used by combining a plurality of such devices.

### [Third Embodiment]

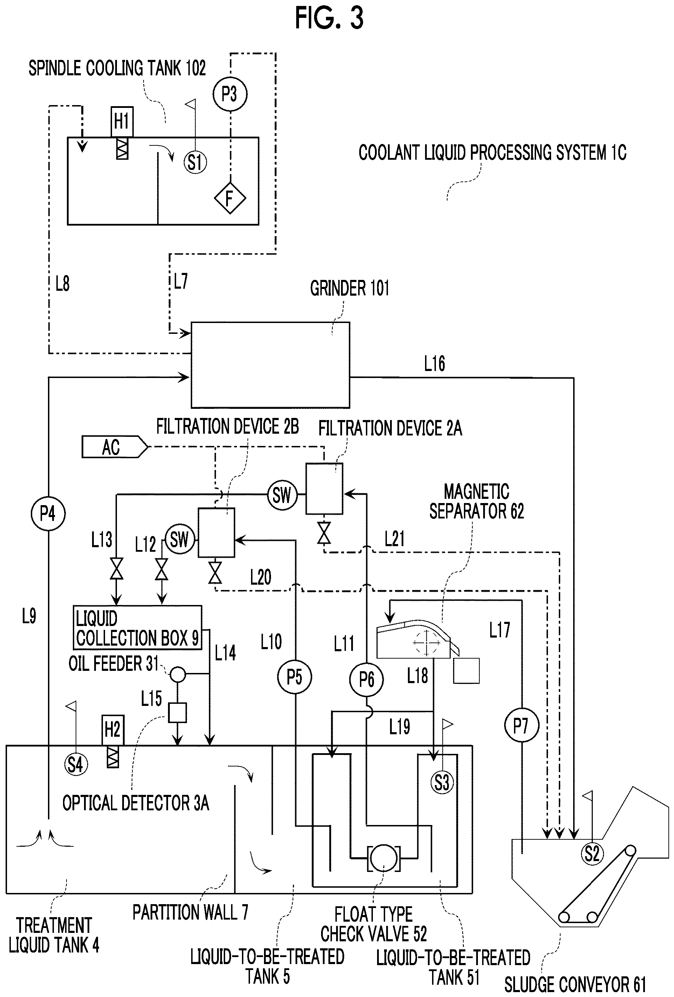

Fig. 3 illustrates structures of a coolant liquid processing system 1C of a third embodiment of the present invention and a grinder 101.

In the coolant liquid processing system 1C of the third embodiment of the present invention, a liquid temperature adjustor H2 and a liquid level gauge S4 are installed in the treatment liquid tank 4.

The liquid temperature adjustor H2 is a device for lowering the temperature of the coolant liquid that has absorbed heat in the grinder 101.

The liquid level gauge S4 is a device for detecting an abnormality when the liquid level of the treatment liquid tank 4 is lowered and monitoring the supply of the coolant liquid to the grinder 101 through a flow path L9 by a pump P4 so as not to stop.

Furthermore, the coolant liquid processing system 1C of the third embodiment of the present invention includes a sludge conveyor 61 and a magnetic separator 62 as a pretreatment device. Accordingly, the load on the filtration device can be reduced. The sludge conveyor 61 is provided with a liquid level gauge S2 and is thus set so that an abnormality such as a decrease in the amount of the coolant liquid supplied from the grinder 101 through a flow path L16 is detected and a pump P7 can always suction the coolant liquid such that the coolant liquid is supplied to the magnetic separator 62 through a flow path L17 by the pump P7.

Furthermore, the coolant liquid processing system 1C of the third embodiment of the present invention includes a liquid-to-be-treated tank 51 inside the liquid-to-be-treated container 5. The liquid-to-be-treated tank 51 is configured by a tank having a smaller bottom surface area and a smaller capacity than the liquid-to-be-treated container 5 and is supplied the coolant liquid from the magnetic separator 62 through flow paths L18 and L19. The liquid-to-be-treated tank 51 communicates with a low position of the liquid-to-be-treated container 5 via a float type check valve 52. The float type check valve 52 is configured to be in a closed state when the float is in a floating state, and allow the coolant liquid to flow from the liquid-to-be-treated container 5 into the liquid-to-be-treated tank 51 when the float is lowered. That is, when the coolant liquid containing sludge in the liquid-to-be-treated tank 51 is suctioned by a pump P5 and/or a pump P6, the water level in the liquid-to-be-treated tank 51 drops. When the liquid level in the liquid-to-be-treated tank 51 reaches a predetermined height or lower, the float follows the liquid level and drops, and the coolant liquid flows from the liquid-to-be-treated container 5 into the liquid-to-be-treated tank 51. The liquid-to-be-treated tank 51 is provided with a liquid level gauge S3, and when there is an abnormality in the operation, the abnormality can be detected immediately.

Next, the actions and effects of the liquid-to-be-treated tank 51 will be described. In a case where the coolant liquid containing sludge is recovered in the liquid-to-be-treated container 5 as in the second embodiment described above, there is a problem that the sludge is deposited on the bottom portion near the outlet of the flow path L6. The liquid-to-be-treated container 5 needs to secure a predetermined size so that the coolant liquid can always be supplied to the filtration device. However, in this case, the capacity of the liquid-to-be-treated container 5 becomes large, and the sludge that has been deposited in the liquid-to-be-treated container 5 cannot be suctioned by the pump.

On the other hand, according to the third embodiment, since the liquid-to-be-treated tank 51 has a smaller bottom surface area than the liquid-to-be-treated container 5, the area where sludge is deposited is limited. In addition, since the capacity is small, a strong flow is generated in the entire inside of the liquid-to-be-treated tank 51, and the sludge is transferred in a direction toward the pump P5 through a flow path L10 and/or the pump P6 through a flow path L11. Therefore, the sludge recovered in the liquid-to-be-treated tank 51 does not accumulate on the bottom portion of the liquid-to-be-treated tank 51, but is suctioned by the pump P5 and/or the pump P6 and supplied to a filtration device 2A and/or a filtration device 2B.

In the coolant liquid processing system 1C of the third embodiment of the present invention, the two filtration devices 2A and 2B are installed in parallel. Furthermore, each of the filtration devices 2A and 2B is provided with a pressure switch SW that detects clogging of the filter and a backwash device that cleans the filter with compressed air supplied from an air compressor AC. The filtration devices 2A and 2B are controlled so that while one of the filtration devices is operated, the operation of the other filtration device is stopped and the filtration device is cleaned. The sludge recovered by the filter cleaning is supplied to the sludge conveyor 61 via a flow path L20 and/or a flow path L21, and is discharged to the outside of the system.

As in the third embodiment, in the coolant liquid processing system of the present invention, it is preferable to install a plurality of filtration devices in parallel. By installing the plurality of filtration devices in parallel, when a leakage of the sludge toward the treatment liquid side is detected in the detector, while the operation is continuously performed by a normal filtration device where the sludge leakage is not detected, only the filtration device where the sludge leakage is detected can be stopped. Therefore, even in a case where a leakage of sludge occurs, it is not necessary to stop the machine tool 100 and the entire coolant liquid processing system, and it is possible to quickly stop the supply of the coolant liquid to the filtration device where the leakage of sludge is detected.

Also, at the time of filter cleaning or filter replacement, a cleaning operation or a replacement operation can be performed without stopping the operation.

The treatment liquid filtered by the filtration devices 2A and 2B is temporarily collected in a liquid collection box 9 and thereafter supplied to the treatment liquid tank 4. In addition, a flow path L15 is branched off from a flow path L14 between the liquid collection box 9 and the treatment liquid tank 4, and the flow path L15 is provided with the oil feeder 31 and the optical detector 3A as in the second embodiment to detect particles contained in the treatment liquid. The treatment liquid filtered by the filtration devices 2A and 2B is temporarily collected in the liquid collection box 9, and particles in the treatment liquid are detected at the outlet thereof, whereby the particles can be detected by the single optical detector 3A for each of the filtration devices 2A and 2B.

Alternatively, an optical detector may be provided in each of the flow paths L13 and L12, which are outlets of the two filtration devices 2A and 2B installed in parallel. In this case, when it is determined from the particle size and/or the number of particles detected by the optical detector that there is a leakage of the sludge, the filtration device where the leakage of the sludge has occurred can be immediately specified. Accordingly, the use of the filtration device where the leakage of the sludge has occurred can be quickly stopped, so that the effect of the present invention of suppressing the incorporation of sludge into the treatment liquid tank 4 can be more reliably exhibited.

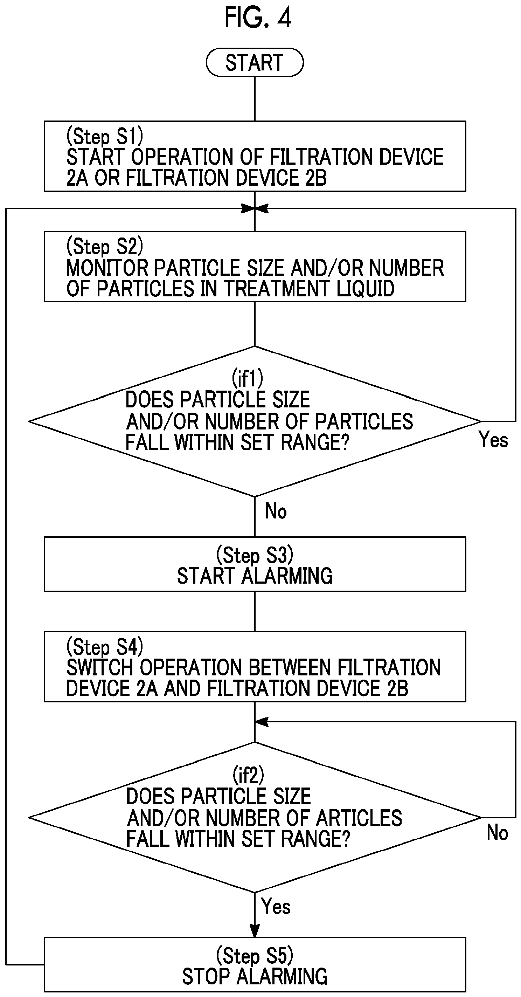

Fig. 4 illustrates an example of a method of controlling the operation of the two filtration devices 2A and 2B. This control method includes Step 1 of starting the operation of the filtration device 2A or the filtration device 2B, and Step 2 of monitoring the particle size and/or the number of particles in the treatment liquid treated by the filtration device 2A or the filtration device 2B by the optical detector 3A.

Next, the presence or absence of a leakage of sludge is determined by the data obtained by the optical detector 3A (if1). The determination of the presence or absence of the leakage of the sludge is not particularly limited. For example, in a case of performing a filtration treatment using a filter having an opening of 10 µm, the leakage of the sludge is detected when 10 or more particles having a particle size of 10 µm or more are detected per 1 mL. Likewise, the number of particles having a particle size larger than the opening is set, and in a case of exceeding this number, it is determined that there is a leakage of sludge.

In a case where it is determined from the data of the optical detector 3A that there is a leakage of the sludge, Step 3 of notifying the leakage of the sludge by an alarm is performed, and subsequently, Step 4 of switching the operation between the filtration device 2A and the filtration device 2B is performed. The alarm is not particularly limited, but an alarm may be sounded or an alarm may be displayed on the operation screen of the coolant liquid processing system. Step 4 is a process of stopping the operating filtration device and starting the operation of the other filtration device. The stopped filtration device may be recovered by investigating the cause of the leakage of sludge, and performing an appropriate treatment such as filter replacement.

After Step 3 and Step 4, the optical detector 3A continuously determines the presence or absence of a leakage of sludge (if2). When the data obtained by the optical detector 3A falls within the range of the set particle size and/or number of particles, Step 5 of stopping the alarm is performed. Step 5 of stopping the alarm may be automatically stopped or stopped by the operator. After stopping the alarm, Step 2 of monitoring the particle size and/or the number of particles in the treatment liquid by the optical detector 3A is performed.

The method of controlling the operation of the two filtration devices 2A and 2B illustrated in Fig. 4 is an example, and any control may be performed. For example, in a control method in which an optical detector is provided in the rear stage of each of the filtration device 2A and the filtration device 2B, and the filtration device 2A and the filtration device 2B are simultaneously operated, only the filtration device determined to have a leakage of sludge is temporarily stopped, and the stopped filtration device may be restored. As in the control method shown in Fig. 4, in the control method in which the two filtration devices are alternately operated, the filtration treatment amount can be controlled to be constant, so that there are advantages that the liquid level of the treatment liquid tank 4 can be easily managed, and the like.

In the third embodiment, a spindle cooling tank 102 is provided as a configuration that supplies a coolant liquid for cooling the drive shaft of the grinder 101. The spindle cooling tank 102 includes two tanks. A tank to which the coolant liquid is supplied from the grinder 101 through a flow path L8 is provided with a liquid temperature adjustor H1, and the other tank is provided with a pump P3 for supplying the coolant liquid to the grinder 101 and a liquid level gauge S1 for detecting an abnormality such as a decrease in the amount of the coolant liquid. In addition, a suction filter F is provided at the front end of the pipe of a flow path L7 for supplying the coolant liquid to the grinder 101 to prevent incorporation of foreign matter into the drive shaft of the grinder 101.

### Industrial Applicability

The coolant liquid processing system of the present invention can be used as an apparatus for removing sludge contained in a coolant liquid. For example, the coolant liquid processing system of the present invention can be used to remove sludge from a coolant liquid in a metal polishing machine using metal as a work material, a rock polishing machine using rock as a work material, and the like.

### Reference Signs List

1A, 1B, 1C coolant liquid processing system
2, 2A, 2B filtration device
3 detector
3A optical detector
31 oil feeder
4 treatment liquid tank
5 liquid-to-be-treated tank
6 pretreatment device
7 partition wall
8 opening
9 liquid collection box
51 water-to-be-treated tank
52 float type check valve
61 sludge conveyor
62 magnetic separator
100 machine tool
101 grinder
102 spindle cooling tank
P1 to P7 pump
L1 to L21 flow path
S1 to S4 liquid level gauge
H1 to H2 liquid temperature adjustor
F suction filter
AC air compressor
SW pressure switch

## Claims

1. A coolant liquid processing system (1A, 1B, 1C) comprising:
a filtration device (2, 2A, 2B) for filtering a coolant liquid containing sludge; and
a detector (3) that detects particles in a treatment liquid filtered by the filtration device (2, 2A, 2B),
**characterized by** a control unit that is configured to stop operation of a filtration treatment or to produce an alarm of a leakage of the sludge due to a damage to a filter in a case where a predetermined number or more of particles having a predetermined particle size larger than the opening size of the filter are detected by the detector (3).

2. The coolant liquid processing system (1A, 1B, 1C) according to claim 1, further comprising:
a treatment liquid tank (4) that stores the treatment liquid filtered by the filtration device (2, 2A, 2B),
wherein the detector (3) is installed between the filtration device (2, 2A, 2B) and the treatment liquid tank (4).

3. The coolant liquid processing system (1A, 1B, 1C) according to claim 1 or 2,
wherein the detector (3) is an optical detector (3A) that detects particles using light.

## Patentansprüche

1. Kühlflüssigkeitsverarbeitungssystem (1A, 1B, 1C), umfassend:
eine Filtrationsvorrichtung (2, 2A, 2B) zum Filtern einer schlammhaltigen Kühlflüssigkeit; und
einen Detektor (3), der Partikel in einer von der Filtrationsvorrichtung (2, 2A, 2B) gefilterten Behandlungsflüssigkeit detektiert,
**gekennzeichnet durch** eine Steuereinheit, die so konfiguriert ist, dass sie Betrieb einer Filtrationsbehandlung stoppt oder einen Alarm über ein Austreten des Schlamms aufgrund einer Beschädigung eines Filters in einem Fall erzeugt, bei dem eine vorbestimmte Anzahl oder mehr Partikel mit einer vorbestimmten Partikelgröße, die größer als die Öffnungsgröße des Filters ist, durch den Detektor (3) detektiert werden.

2. Kühlflüssigkeitsverarbeitungssystem (1A, 1B, 1C) nach Anspruch 1, ferner umfassend:
einen Behandlungsflüssigkeitsbehälter (4), der die von der Filtrationsvorrichtung (2, 2A, 2B) gefilterte Behandlungsflüssigkeit speichert,
wobei der Detektor (3) zwischen der Filtrationsvorrichtung (2, 2A, 2B) und dem Behandlungsflüssigkeitsbehälter (4) installiert ist.

3. Kühlflüssigkeitsverarbeitungssystem (1A, 1B, 1C) nach Anspruch 1 oder 2,
wobei der Detektor (3) ein optischer Detektor (3A) ist, der Partikel unter Verwendung von Licht detektiert.

## Revendications

1. Un système de traitement de liquide de refroidissement (1A, 1B, 1C) comprenant :
un dispositif de filtration (2, 2A, 2B) pour filtrer un liquide de refroidissement contenant des boues ; et
un détecteur (3) qui détecte des particules dans un liquide de traitement filtré par le dispositif de filtration (2, 2A, 2B),
**caractérisé par** une unité de commande qui est configurée pour arrêter le fonctionnement d'un traitement de filtration ou pour produire une alarme d'une fuite de boues due à un filtre endommagé dans un cas où au moins un nombre prédéterminé de particules ayant une taille de particule prédéterminée supérieure à la taille d'ouverture du filtre sont détectées par le détecteur (3).

2. Le système de traitement de liquide de refroidissement (1A, 1B, 1C) selon la revendication 1, comprenant en outre :
un réservoir de liquide de traitement (4) qui stocke le liquide de traitement filtré par le dispositif de filtration (2, 2A, 2B),
dans lequel le détecteur (3) est installé entre le dispositif de filtration (2, 2A, 2B) et le réservoir de liquide de traitement (4).

3. Le système de traitement de liquide de refroidissement (1A, 1B, 1C) selon la revendication 1 ou 2,
dans lequel le détecteur (3) est un détecteur optique (3A) qui détecte les particules au moyen de la lumière.
